# EUROPEAN PATENT APPLICATION

(11) **EP 3 546 274 A1**
(43) Date of publication of application: **02.10.2019**
(21) Application number: 17874203.7
(22) Date of filing: 14.11.2017
(51) Int. Cl.: B60L 15/20

(54) **VEHICLE, VEHICLE SLOPE ASSIST SYSTEM, AND CONTROL METHOD THEREOF**

(30) Priority: 28.11.2016 CN 201611069046
(71) Applicant: BYD Company Limited, Shenzhen, Guangdong 518118 (CN)
(72) Inventor: YAO, Wei, Shenzhen Guangdong 518118 (CN); WANG, Shiyou, Shenzhen Guangdong 518118 (CN); YUE, Guangjun, Shenzhen Guangdong 518118 (CN); CHEN, Li, Shenzhen Guangdong 518118 (CN)
(74) Representative: m patent group
(86) International application number: PCT/CN2017/110845
(87) International publication number: WO 2018/095242

(57) **Abstract**

This application discloses a vehicle, a ramp auxiliary system of the vehicle and a control method thereof. The vehicle is driven by a rim motor. The method includes: acquiring current state information of the vehicle; judging whether the ramp auxiliary system meets preset activation conditions or not according to the current state information, wherein the preset activation conditions are used for activating the ramp auxiliary system; activating the ramp auxiliary system if the ramp auxiliary system meets the preset activation conditions; judging whether to control the vehicle to be in a torque keeping mode or not according to the current state information, wherein torque for driving the vehicle is kept unchanged in the torque keeping mode; and when the vehicle is in the torque keeping mode, driving the vehicle according to the preset torque to prevent the vehicle from slipping.

## Description

### CROSS-REFERENCE TO RELATED APPLICATIONS

This application is based on and claims priority to Chinese Patent Application No. 201611069046.4, filed on November 28, 2016, which is incorporated herein by reference in its entirety.

### FIELD

This application relates to the technical field of vehicles and particularly relates to a control method of a ramp auxiliary system of a vehicle, a ramp auxiliary system of a vehicle, and a vehicle.

### BACKGROUND

With the popularity of new energy vehicles, more and more drivers are concerned about the running comfort of vehicles. Specific to the problem of slip due to ramp starting, in related technologies, a method for controlling the starting of a vehicle on a ramp is not reliable enough, and the safety of the vehicle is difficult to ensure.

### SUMMARY

This application aims to solve at least one of the technical problems in the above technology to some extent. Therefore, this application is directed to a control method of a ramp auxiliary system of a vehicle, and the control method can accurately and comprehensively judge the running state of the vehicle in advance and can automatically drive the vehicle in time to prevent the vehicle from slipping, thereby improving the safety of the vehicle.

This application is also directed to a ramp auxiliary system of a vehicle.

This application is further directed to a vehicle.

In order to achieve the above objectives, a first embodiment of this application provides a control method of a ramp auxiliary system of a vehicle, wherein the vehicle is driven by a rim motor. The method includes: acquiring current state information of the vehicle; judging whether the ramp auxiliary system meets preset activation conditions or not according to the current state information, wherein the preset activation conditions are used for activating the ramp auxiliary system; activating the ramp auxiliary system if the ramp auxiliary system meets the preset activation conditions; judging whether to control the vehicle to be in a torque keeping mode or not according to the current state information, wherein the torque for driving the vehicle is kept unchanged in the torque keeping mode; and when the vehicle is in the torque keeping mode, driving the vehicle according to the preset torque to prevent the vehicle from slipping.

The control method of the ramp auxiliary system of the vehicle according to the embodiment of this application includes: when the ramp auxiliary system meets the preset activation conditions, activating the ramp auxiliary system; judging whether to control the vehicle to be in the torque keeping mode or not according to the current state information of the vehicle; and when the vehicle is in the torque keeping mode, driving the vehicle according to the preset torque to prevent the vehicle from slipping. Therefore, the running state of the vehicle can be accurately and comprehensively judged in advance, and driving control can be automatically performed on the vehicle in time to prevent the vehicle from slipping, thereby improving the safety of the vehicle.

In order to achieve the above objectives, a second embodiment of this application provides a ramp auxiliary system of a vehicle, wherein the vehicle is driven by a rim motor. The system includes an acquisition module which is used for acquiring current state information of the vehicle; a judgment module which is used for judging whether the ramp auxiliary system meets preset activation conditions or not according to the current state information, wherein the preset activation conditions are used for activating the ramp auxiliary system; an activation module which is used for activating the ramp auxiliary system when the ramp auxiliary system meets the preset activation conditions; and a control module which is used for judging whether to control the vehicle to be in a torque keeping mode or not according to the current state information when the ramp auxiliary system is activated, and driving the vehicle according to preset torque when the vehicle is in the torque keeping mode to prevent the vehicle from slipping, wherein the torque for driving the vehicle is kept unchanged in the torque keeping mode.

When the ramp auxiliary system of the vehicle according to the embodiment of this application meets the preset activation conditions, the activation module activates the ramp auxiliary system, and the control module judges whether to control the vehicle to be in the torque keeping mode or not according to the current state information of the vehicle; and when the vehicle is in the torque keeping mode, the control module drives the vehicle according to the preset torque to prevent the vehicle from slipping. Therefore, the running state of the vehicle can be accurately and comprehensively judged in advance, and driving control can be automatically performed on the vehicle in time to prevent the vehicle from slipping, thereby improving the safety of the vehicle.

In order to achieve the above objectives, a third embodiment of this application provides a vehicle, and the vehicle includes the ramp auxiliary system of the vehicle according to the second embodiment of this application.

The running state of the vehicle according to the embodiment of this application can be accurately and comprehensively judged in advance, and driving control can be automatically performed in time to prevent the vehicle from slipping, thereby improving the safety.

In order to achieve the above objectives, a fourth embodiment of this application provides a computer storage medium used for storing a computer instruction, wherein when the computer instruction is executed by a controller of equipment, the control method of the ramp auxiliary system of the vehicle is executed.

Additional aspects and advantages of embodiments of this application will be given in part in the following descriptions, become apparent in part from the following descriptions, or be learned from the practice of the embodiments of this application.

### BRIEF DESCRIPTION OF THE DRAWINGS

Fig. 1 is a flow diagram of a control method of a ramp auxiliary system of a vehicle according to one embodiment of this application;
Fig. 2 is a structural schematic diagram of a vehicle according to one embodiment of this application;
Fig. 3 is a stress schematic diagram of a downhill reversing vehicle according to one embodiment of this application;
Fig. 4 is a stress schematic diagram of an uphill starting vehicle according to one embodiment of this application;
Fig. 5 is a flow diagram of a control method of a ramp auxiliary system of a vehicle according to one specific embodiment of this application;
Fig. 6 is a flow diagram of a control method of a ramp auxiliary system of a vehicle according to another specific embodiment of this application;
Fig. 7 is a block diagram of a ramp auxiliary system of a vehicle according to one embodiment of this application; and
Fig. 8 is a block diagram of a vehicle according to one embodiment of this application.

### DETAILED DESCRIPTION

The following describes in detail embodiments of this application. Examples of the embodiments are shown in the accompanying drawings, where reference signs that are the same or similar from beginning to end represent same or similar components or components that have same or similar functions. The embodiments described below with reference to the accompanying drawings are exemplary, and are used for explaining rather than limiting this application.

A vehicle, a ramp auxiliary system of the vehicle and a control method thereof according to the embodiments of this application are described below with reference to the accompanying drawings.

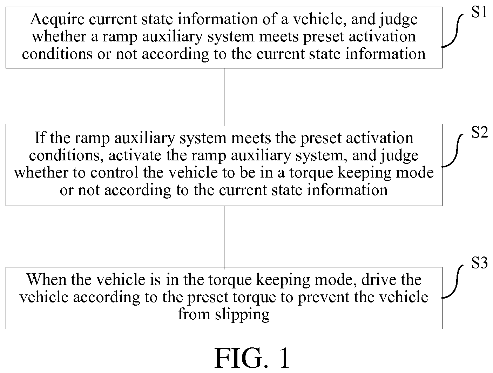

Fig. 1 is a flow diagram of a control method of a ramp auxiliary system of a vehicle according to one embodiment of this application.

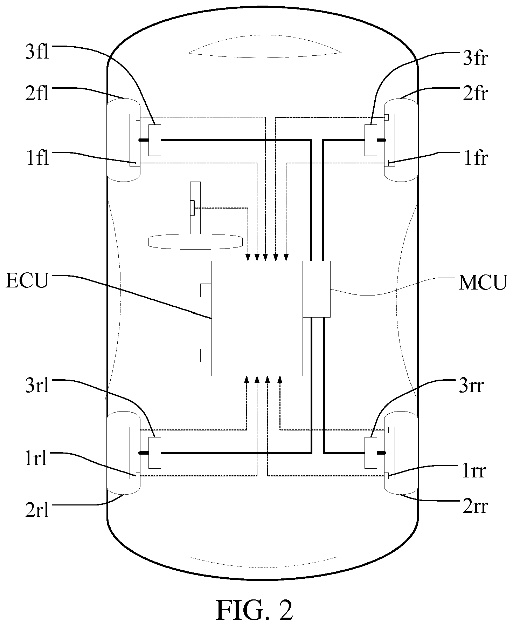

It should be noted that the vehicle according to the embodiment of this application may be driven by rim motors, and each wheel of the vehicle may be correspondingly provided with one rim motor. As shown in Fig. 2, a front left wheel 2fl is driven or braked by a rim motor 3fl, a front right wheel 2fr is driven or braked by a rim motor 3fr, a rear left wheel 2rl is driven or braked by a rim motor 3rl, and a rear right wheel 2rr is driven or braked by a rim motor 3rr.

As shown in Fig. 1, the control method of the ramp auxiliary system of the vehicle according to the embodiment of this application includes the followings.

S1, acquire current state information of the vehicle, and judge whether the ramp auxiliary system meets preset activation conditions or not according to the current state information.

In one embodiment of this application, the preset activation conditions are used for activating the ramp auxiliary system.

In one embodiment of this application, the current state information of the vehicle includes at least one of the current gear of the vehicle, the current vehicle speed of the vehicle, the current slope of the vehicle, accelerator pedal information of the vehicle, brake pedal information of the vehicle, rotation speed information of the rim motors, orientation information of a head of the vehicle and the like.

As shown in Fig. 2, the vehicle according to the embodiment of this application also may include wheel speed sensors 1fl, 1fr, 1rl and 1rr which are arranged corresponding to each wheel and are used for respectively acquiring current rotation speeds of the front left wheel 2fl, the front right wheel 2fr, the rear left wheel 2rl and the rear right wheel 2rr. After the current rotation speeds of the wheels are acquired, the current vehicle speed of the vehicle may be further acquired according to the relationship between the rotation speeds of the wheels and the vehicle speed.

As shown in Fig. 2, the vehicle according to the embodiment of this application also may include an ECU (Electronic Control Unit) and an MCU (Motor Control Unit). The MCU may control the magnitude and direction of driving force and brake force of each rim motor, and the MCU also may acquire rotation speed information of each rim motor. The MCU may acquire the rotation speed of a single rim motor and also may acquire the rotation speeds of multiple or all of the rim motors. In one embodiment of this application, the current gear of the vehicle, the current slope of the vehicle, the accelerator pedal information of the vehicle, the brake pedal information of the vehicle and the orientation information of the head of the vehicle may be respectively acquired by the ECU through a gear sensor, a slope sensor, an accelerator pedal sensor, a brake pedal sensor and a gravity sensor.

In one embodiment of this application, the ramp auxiliary system may be controlled to be in an activation standby state according to the current gear of the vehicle and the current slope of the vehicle. After the ramp auxiliary system is in the activation standby state, whether the ramp auxiliary system meets the preset conditions (namely conditions of triggering activation) or not may be judged according to the current vehicle speed of the vehicle, the accelerator pedal information of the vehicle and the brake pedal information of the vehicle, and if so, the ramp auxiliary system is judged to meet the preset activation conditions. The activation standby state is used for indicating that the ramp auxiliary system is already started and waits for activation.

Specifically, if the current gear of the vehicle is D or R and the current slope of the vehicle is not zero, the ramp auxiliary system may be controlled to be in the activation standby state. After the ramp auxiliary system is in the activation standby state, if the current vehicle speed of the vehicle is zero, and when the accelerator pedal of the vehicle is not stepped on and the brake pedal of the vehicle is stepped on, brake force is greater than slip force of the vehicle on a ramp, namely the preset conditions are met, the ramp auxiliary system is judged to meet the preset activation conditions.

S2, if the ramp auxiliary system meets the preset activation conditions, activate the ramp auxiliary system, and judge whether to control the vehicle to be in a torque keeping mode or not according to the current state information of the vehicle, wherein torque for driving the vehicle is kept unchanged in the torque keeping mode.

After the ramp auxiliary system is activated, whether to control the vehicle to be in the torque keeping mode or not may be further judged according to the current state information. Specifically, whether the entire driving force of the vehicle is greater than the slip force of the vehicle on the ramp or not may be judged according to the accelerator pedal information of the vehicle, the brake pedal information of the vehicle, the current gear of the vehicle, the rotation speed information of the rim motors and the orientation information of the head of the vehicle. When the vehicle stands on the ramp, the slip force is equal to a downward component force of the self-gravity of the vehicle along the slope minus an upward friction force along the slope; and when the vehicle normally starts, the slip force is equal to the downward component force of the self-gravity of the vehicle along the slope plus a downward friction force along the slope. If the entire driving force is less than or equal to the slip force, judge that the vehicle may be in a slip state, and the vehicle is controlled to be in the torque keeping mode, wherein the slip state includes a front slip state due to downhill reversing and a rear slip state due to uphill starting.

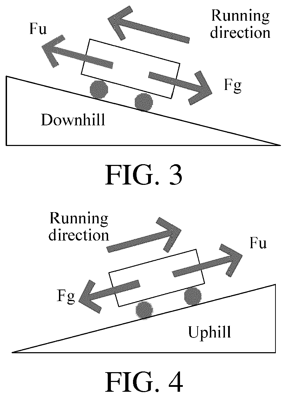

Fig. 3 shows a stress condition when the vehicle stands on the ramp, the head of the vehicle is downward and the vehicle is ready to reverse. In a reversing starting process, within a period of time that the brake pedal is loosened and the accelerator pedal is stepped on, the vehicle is subjected to upward driving force Fu parallel to the ramp and slip force Fg, wherein the slip force Fg is a resultant force of the downward component force of the self-gravity of the vehicle along the slope and the friction force of the pavement to the vehicle. When the driving force Fu is less than the slip force Fg, the entire vehicle is subjected to the resultant force downward along the slope, the vehicle is short of power, and may result in a slipping downward tendency of the vehicle, that is, the vehicle may be in a front slip state due to downhill reversing.

Fig. 4 shows a stress condition when the vehicle stands on the ramp, the head of the vehicle is upward and the vehicle is ready to start. In a starting process, within a period of time that the brake pedal is loosened and the accelerator pedal is stepped on, the vehicle is subjected to the upward driving force Fu parallel to the ramp and the slip force Fg, wherein the slip force Fg is the resultant force of the downward component force of the self-gravity of the vehicle along the slope and the friction force of the pavement to the vehicle. When the driving force Fu is less than the slip force Fg, the entire vehicle is subjected to the resultant force downward along the slope, the vehicle is short of power, and may result in a slipping downward tendency of the vehicle, that is, the vehicle may be in a rear slip state due to uphill starting.

S3, when the vehicle is in the torque keeping mode, drive the vehicle according to the preset torque to prevent the vehicle from slipping.

In one embodiment of this application, the preset torque may be calibrated according to the slip force of the vehicle on different ramps. It should be understood that when the vehicle is driven according to the preset torque, the vehicle may be kept to not slide down, namely the vehicle does not slip.

In addition, in one embodiment of this application, when the vehicle is driven according to the preset torque, whether the driving force corresponding to the entire actual output torque of the vehicle is greater than the slip force of the vehicle on the ramp or not is also judged, wherein if the driving force corresponding to the entire actual output torque of the vehicle is greater than the slip force of the vehicle on the ramp, the ramp auxiliary system is closed; if the driving force corresponding to the entire actual output torque of the vehicle is less than or equal to the slip force of the vehicle on the ramp, whether the time that the vehicle is in the torque keeping mode reaches preset time or not is judged; and if the time that the vehicle is in the torque keeping mode reaches the preset time, the ramp auxiliary system is closed.

The control method of the ramp auxiliary system of the vehicle according to the embodiment of this application includes: when the ramp auxiliary system meets the preset activation conditions, activating the ramp auxiliary system; judging whether to control the vehicle to be in the torque keeping mode or not according to the current state information of the vehicle; and when the vehicle is in the torque keeping mode, driving the vehicle according to the preset torque to prevent the vehicle from slipping. Therefore, the running state of the vehicle may be accurately and comprehensively judged in advance, and driving control may be automatically performed on the vehicle in time to prevent the vehicle from slipping, thereby improving the safety of the vehicle.

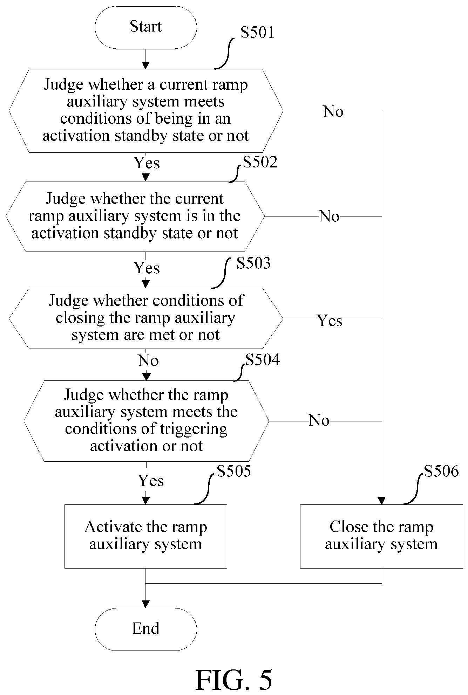

In one specific embodiment of this application, as shown in Fig. 5, in the control method of the ramp auxiliary system of the vehicle, judging whether the ramp auxiliary system meets the preset activation conditions or not specifically may specifically include:
S501, judge whether the current ramp auxiliary system meets the conditions of being in an activation standby state or not; if so, execute S502; and if not, execute step S506, end the present judgment, and then, perform the next judgment.
S502, judge whether the current ramp auxiliary system is in the activation standby state or not; if so, execute step S503; and if not, execute step S506, end the present judgment, and then, perform the next judgment.
S503, judge whether the conditions of closing the ramp auxiliary system are met or not; if not, execute step S504; and if so, execute step S506.
S504, judge whether the ramp auxiliary system meets the conditions of triggering activation or not; if so, execute step S505; and if not, execute step S506.
S505, activate the ramp auxiliary system.
S506, close the ramp auxiliary system.

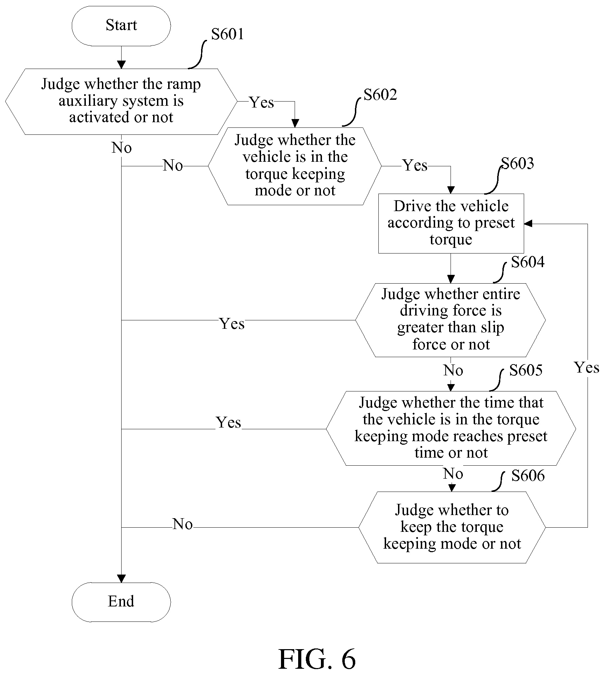

In one specific embodiment of this application, as shown in Fig. 6, the control method of the ramp auxiliary system of the vehicle also may include the following steps:
S601, judge whether the ramp auxiliary system is activated or not; if so, execute step S602; if not, end a procedure.
S602, judge whether the vehicle is in a torque keeping mode or not; if so, execute step S603; and if not, end the procedure.
S603, drive the vehicle according to preset torque.
S604, judge whether entire driving force is greater than slip force or not; if so, end the procedure; and if not, execute step S605.
S605, judge whether the time that the vehicle is in the torque keeping mode reaches preset time or not; if so, end the procedure; and if not, execute step S606.
S606, judge whether to keep the torque keeping mode or not, wherein the conditions of judging whether to keep the torque keeping mode or not may be identical to the conditions of judging whether to control the vehicle to be in the torque keeping mode or not; if so, return to step S603; and if not, end the procedure.

In order to realize the control method of the ramp auxiliary system of the vehicle according to the above embodiment, this application also provides a ramp auxiliary system of a vehicle.

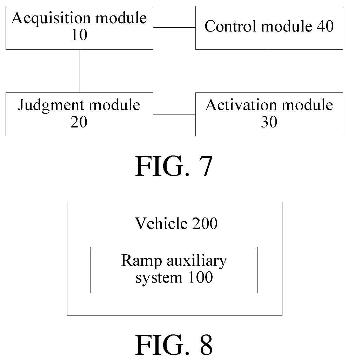

As shown in Fig. 7, the ramp auxiliary system of the vehicle according to the embodiment of this application includes an acquisition module 10, a judgment module 20, an activation module 30 and a control module 40,

wherein the acquisition module 10 is used for acquiring current state information of the vehicle; the judgment module 20 is used for judging whether the ramp auxiliary system meets preset activation conditions or not according to the current state information, wherein the preset activation conditions are used for activating the ramp auxiliary system; the activation module 30 is used for activating the ramp auxiliary system when the ramp auxiliary system meets the preset activation conditions; and the control module 40 is used for judging whether to control the vehicle to be in a torque keeping mode or not according to the current state information when the ramp auxiliary system is activated, and driving the vehicle according to preset torque when the vehicle is in the torque keeping mode, to prevent the vehicle from slipping, wherein the torque for driving the vehicle is kept unchanged in the torque keeping mode.

In one embodiment of this application, the current state information of the vehicle includes at least one of the current gear of the vehicle, the current vehicle speed of the vehicle, the current slope of the vehicle, the accelerator pedal information of the vehicle, the brake pedal information of the vehicle, the rotation speed information of the rim motors, the orientation information of the head of the vehicle and the like.

As shown in Fig. 2, the vehicle according to the embodiment of this application also may include wheel speed sensors 1fl, 1fr, 1rl and 1rr which are arranged corresponding to each wheel and are used for respectively acquiring current rotation speeds of a front left wheel 2fl, a front right wheel 2fr, a rear left wheel 2rl and a rear right wheel 2rr. After the current rotation speeds of the wheels are acquired, the current vehicle speed of the vehicle may be further acquired according to the relationship between the rotation speeds of the wheels and the vehicle speed.

As shown in Fig. 2, the vehicle according to the embodiment of this application also may include an ECU and an MCU. The MCU may control the magnitude and direction of the driving force and brake force of each rim motor, and the MCU also may acquire the rotation speed information of each rim motor, wherein the MCU may acquire the rotation speed of a single rim motor and also can acquire the rotation speeds of a plurality of rim motors or all rim motors. In one embodiment of this application, the current gear of the vehicle, the current slope of the vehicle, the accelerator pedal information of the vehicle, the brake pedal information of the vehicle and the orientation information of the head of the vehicle may be respectively acquired by the ECU through a gear sensor, a slope sensor, an accelerator pedal sensor, a brake pedal sensor and a gravity sensor.

In one embodiment of this application, the judgment module 20 may control the ramp auxiliary system to be in an activation standby state according to the current gear of the vehicle and the current slope of the vehicle. After the ramp auxiliary system is in the activation standby state, the judgment module 20 may judge whether the ramp auxiliary system meets the preset conditions (conditions of triggering activation) or not according to the current vehicle speed of the vehicle, the accelerator pedal information of the vehicle and the brake pedal information of the vehicle, and judge that the ramp auxiliary system meets the preset activation conditions when the conditions of triggering activation are met. The activation standby state is used for indicating that the ramp auxiliary system is already started and waits for activation.

Specifically, if the current gear of the vehicle is D or R and the current slope of the vehicle is not zero, the judgment module 20 may control the ramp auxiliary system to be in the activation standby state. After the ramp auxiliary system is in the activation standby state, if the current vehicle speed of the vehicle is zero, and when the accelerator pedal of the vehicle is not stepped on and the brake pedal of the vehicle is stepped on, brake force is greater than the slip force of the vehicle on a ramp, namely the preset conditions are met, the judgment module 20 may judge that the ramp auxiliary system meets the preset activation conditions.

After the ramp auxiliary system is activated, the control module 40 may further judge whether to control the vehicle to be in a torque keeping mode or not according to the current state information. Specifically, the control module 40 may judge whether the entire driving force of the vehicle is greater than the slip force of the vehicle on the ramp or not according to the accelerator pedal information of the vehicle, the brake pedal information, the current gear of the vehicle, the rotation speed information of the rim motors and the orientation information of the head of the vehicle. When the vehicle stands on the ramp, the slip force is equal to the downward component force of the self-gravity of the vehicle along the slope minus the upward friction force along the slope; when the vehicle normally starts, the slip force is equal to the downward component force of the self-gravity of the vehicle along the slope plus the downward friction force along the slope. If the entire driving force is less than or equal to the slip force, the control module 40 judges that the vehicle may be in a slip state and controls the vehicle to be in the torque keeping mode, wherein the slip state includes a front slip state due to downhill reversing and a rear slip state due to uphill starting.

Fig. 3 shows a stress condition when the vehicle stands on the ramp, the head of the vehicle is downward and the vehicle is ready to reverse. In a reversing starting process, within a period of time that the brake pedal is loosened and the accelerator pedal is stepped on, the vehicle is subjected to upward driving force Fu parallel to the ramp and slip force Fg, wherein the slip force Fg is a resultant force of the downward component force of the self-gravity of the vehicle along the slope and the friction force of the pavement to the vehicle. When the driving force Fu is less than the slip force Fg, the entire vehicle is subjected to the resultant force downward along the slope, the vehicle is short of power, and may result in a slipping downward tendency of the vehicle, that is, the vehicle may be in a front slip state due to downhill reversing.

Fig. 4 shows a stress condition when the vehicle stands on the ramp, the head of the vehicle is upward and the vehicle is ready to start. In a starting process, within a period of time that the brake pedal is loosened and the accelerator pedal is stepped on, the vehicle is subjected to the upward driving force Fu parallel to the ramp and the slip force Fg, wherein the slip force Fg is a resultant force of the downward component force of the self-gravity of the vehicle along the slope and the friction force of the pavement to the vehicle. When the driving force Fu is less than the slip force Fg, the entire vehicle is subjected to the resultant force downward along the slope, the vehicle is short of power, and may result in a slipping downward tendency of the vehicle, that is, the vehicle may be in a rear slip state due to uphill starting.

In one embodiment of this application, the preset torque value may be calibrated according to the slip force of the vehicle on different ramps. It should be understood that when the vehicle is subjected to driving control according to the preset torque value, the vehicle can be kept to not slide down, namely the vehicle does not slip.

In addition, in one embodiment of this application, when the control module 40 drives the vehicle according to the preset torque, whether the driving force corresponding to the entire actual output torque of the vehicle is greater than the slip force of the vehicle on the ramp or not is also judged, wherein if the driving force corresponding to the entire actual output torque of the vehicle is greater than the slip force of the vehicle on the ramp, the control module 40 closes the ramp auxiliary system; if the driving force corresponding to the entire actual output torque of the vehicle is less than or equal to the slip force of the vehicle on the ramp, the control module 40 judges whether the time that the vehicle is in the torque keeping mode reaches preset time or not; and if the time that the vehicle is in the torque keeping mode reaches the preset time, the control module closes the ramp auxiliary system.

When the ramp auxiliary system of the vehicle according to the embodiment of this application meets the preset activation conditions, the activation module activates the ramp auxiliary system, and the control module judges whether to control the vehicle to be in the torque keeping mode or not according to the current state information of the vehicle; and when the vehicle is in the torque keeping mode, the control module performs driving control according to the preset torque to prevent the vehicle from slipping. Therefore, the running state of the vehicle can be accurately and comprehensively judged in advance, and driving control can be automatically performed on the vehicle in time to prevent the vehicle from slipping, thereby improving the safety of the vehicle.

Corresponding to the above embodiment, this application also provides a vehicle.

As shown in Fig. 8, the vehicle 200 according to the embodiment of this application includes the ramp auxiliary system 100 provided by the above embodiment of this application, and the specific implementation mode may refer to the above embodiment. In order to avoid redundancy, the descriptions thereof are omitted herein.

The running state of the vehicle according to the embodiment of this application can be accurately and comprehensively judged in advance, and driving control can be automatically performed on the vehicle in time to prevent the vehicle from slipping, thereby improving the safety of the vehicle.

Corresponding to the above embodiment, this application also provides a computer storage medium used for storing a computer instruction. When the computer instruction is executed by a controller of equipment, the control method of the ramp auxiliary system of the vehicle is executed.

In the description of this application, it should be understood that, orientations or position relationships indicated by terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", and "circumferential" are orientations or position relationship shown based on the accompanying drawings, and are merely used for describing this application and simplifying the description, rather than indicating or implying that the apparatus or element should have a particular orientation or be constructed and operated in a particular orientation, and therefore, should not be construed as a limitation on this application.

In addition, terms "first" and "second" are used only for description purposes, and shall not be understood as indicating or suggesting relative importance or implicitly indicating a quantity of indicated technical features. Therefore, features modified by "first " and "second " may explicitly or implicitly include one or more features. In descriptions of this application, "multiple" means two or more, unless otherwise defined clearly and specifically.

In this application, unless otherwise clearly stipulated and limited, terms "mount", "connect", and "fix" should be understood in a generalized manner, for example, may be understood as fixed connection, detachable connection, or integration; or may be understood as mechanical connection, electrical connection, or mutual communication; or may be understood as direct connection, or indirect connection by means of a medium, or internal communication of two elements or a mutual relationship between two elements. A person of ordinary skill in the art may understand specific meanings of the terms in this application according to specific situations.

In the descriptions of this specification, descriptions such as reference terms "an embodiment", "some embodiments", "example", "specific example", or "some examples" intend to indicate that specific features, structures, materials, or characteristics described with reference to embodiments or examples are included in at least one embodiment or example of this application. In this specification, schematic descriptions of the foregoing terms do not need to aim at a same embodiment or example. In addition, in a case that is not mutually contradictory, persons skilled in the art can combine or group different embodiments or examples that are described in this specification and features of the different embodiments or examples.

Although the embodiments of this application are shown and described above, it can be understood that, the foregoing embodiments are exemplary, and cannot be construed as a limitation to this application. Within the scope of this application, a person of ordinary skill in the art may make changes, modifications, replacement, and variations to the foregoing embodiments.

## Claims

1. A control method of a ramp auxiliary system of a vehicle, wherein the vehicle is driven by a rim motor, and the method comprises:
acquiring current state information of the vehicle;
judging whether the ramp auxiliary system meets preset activation conditions or not according to the current state information, wherein the preset activation conditions are used for activating the ramp auxiliary system;
activating the ramp auxiliary system if the ramp auxiliary system meets the preset activation conditions;
judging whether to control the vehicle to be in a torque keeping mode or not according to the current state information, wherein torque for driving the vehicle is kept unchanged in the torque keeping mode; and
when the vehicle is in the torque keeping mode, driving the vehicle according to the preset torque to prevent the vehicle from slipping.

2. The control method of the ramp auxiliary system of the vehicle according to claim 1, wherein the current state information of the vehicle includes at least one of the current gear of the vehicle, the current vehicle speed of the vehicle, the current slope of the vehicle, accelerator pedal information of the vehicle, brake pedal information of the vehicle, rotation speed information of the rim motor and orientation information of a head of the vehicle.

3. The control method of the ramp auxiliary system of the vehicle according to claim 2, wherein judging whether the ramp auxiliary system meets the preset activation conditions or not according to the current state information comprises:
controlling the ramp auxiliary system to be in an activation standby state according to the current gear of the vehicle and the current slope of the vehicle, wherein the activation standby state is used for indicating that the ramp auxiliary system is already started and waits for activation;
after the ramp auxiliary system is in the activation standby state, judging whether the current vehicle speed of the vehicle, the accelerator pedal information of the vehicle and the brake pedal information of the vehicle meet the preset conditions or not; and
if so, then judging that the ramp auxiliary system meets the preset activation conditions.

4. The control method of the ramp auxiliary system of the vehicle according to claim 3, wherein the preset conditions comprises: the current vehicle speed of the vehicle is zero, and when an accelerator pedal of the vehicle is not stepped on and a brake pedal of the vehicle is stepped on, brake force is greater than slip force of the vehicle on a ramp.

5. The control method of the ramp auxiliary system of the vehicle according to claim 2, wherein judging whether to control the vehicle to be in the torque keeping mode or not according to the current state information comprises:
judging whether an entire driving force of the vehicle is greater than the slip force of the vehicle on a ramp or not according to the accelerator pedal information of the vehicle, the brake pedal information, the current gear of the vehicle, the rotation speed information of the rim motor and the orientation information of the head of the vehicle; and
if the entire driving force is less than or equal to the slip force, then judging that the vehicle may be in a slip state, and controlling the vehicle to be in the torque keeping mode, wherein the slip state includes a front slip state due to downhill reversing and a rear slip state due to uphill starting.

6. The control method of the ramp auxiliary system of the vehicle according to any one of claims 1 to 5, further comprising: when the vehicle is subjected to driving control by a preset torque value, to judge whether the driving force corresponding to entire actual output torque of the vehicle is greater than the slip force of the vehicle on the ramp or not;
if the driving force corresponding to the entire actual output torque of the vehicle is greater than the slip force of the vehicle on the ramp, then closing the ramp auxiliary system;
if the driving force corresponding to the entire actual output torque of the vehicle is less than or equal to the slip force of the vehicle on the ramp, then judging whether the time that the vehicle is in the torque keeping mode reaches preset time or not; and
if the time that the vehicle is in the torque keeping mode reaches the preset time, then closing the ramp auxiliary system.

7. A ramp auxiliary system of a vehicle, wherein the vehicle is driven by a rim motor, and the system comprises:
an acquisition module which is used for acquiring current state information of the vehicle;
a judgment module which is used for judging whether the ramp auxiliary system meets preset activation conditions or not according to the current state information, wherein the preset activation conditions are used for activating the ramp auxiliary system;
an activation module which is used for activating the ramp auxiliary system when the ramp auxiliary system meets the preset activation conditions; and
a control module which is used for judging whether to control the vehicle to be in a torque keeping mode or not according to the current state information when the ramp auxiliary system is activated, and driving the vehicle according to preset torque when the vehicle is in the torque keeping mode, to prevent the vehicle from slipping, wherein the torque for driving the vehicle is kept unchanged in the torque keeping mode.

8. The ramp auxiliary system of the vehicle according to claim 7, wherein the current state information of the vehicle comprises at least one of the current gear of the vehicle, the current vehicle speed of the vehicle, the current slope of the vehicle, accelerator pedal information of the vehicle, brake pedal information of the vehicle, rotation speed information of the rim motor and orientation information of a head of the vehicle.

9. The ramp auxiliary system of the vehicle according to claim 8, wherein the judgment module is used for controlling the ramp auxiliary system to be in an activation standby state according to the current gear of the vehicle and the current slope of the vehicle, the activation standby state is used for indicating that the ramp auxiliary system is already started and waits for activation, and the judgment module is used for judging whether the ramp auxiliary system meets the preset conditions or not according to the current vehicle speed of the vehicle, the accelerator pedal information of the vehicle and the brake pedal information of the vehicle after the ramp auxiliary system is in the activation standby state, and judging that the ramp auxiliary system meets the preset activation conditions when the preset conditions are met.

10. The ramp auxiliary system of the vehicle according to claim 9, wherein the preset conditions comprise: the current vehicle speed of the vehicle is zero, and when an accelerator pedal of the vehicle is not stepped on and a brake pedal of the vehicle is stepped on, brake force is greater than slip force of the vehicle on a ramp.

11. The ramp auxiliary system of the vehicle according to claim 8, wherein the control module is used for judging whether entire driving force of the vehicle is greater than slip force of the vehicle on a ramp or not according to the accelerator pedal information of the vehicle, the brake pedal information, the current gear of the vehicle, the rotation speed information of the rim motor and the orientation information of the head of the vehicle, judging that the vehicle may be in a slip state when the entire driving force is less than or equal to the slip force, and controlling the vehicle to be in a torque keeping mode, wherein the slip state includes a front slip state due to downhill reversing and a rear slip state due to uphill starting.

12. The ramp auxiliary system of the vehicle according to any one of claims 7 to 11, wherein when the control module performs driving control on the vehicle by a preset torque value, the control module also judges whether driving force corresponding to entire actual output torque of the vehicle is greater than the slip force of the vehicle on the ramp or not, wherein if the driving force corresponding to the entire actual output torque of the vehicle is greater than the slip force of the vehicle on the ramp, the control module closes the ramp auxiliary system; if the driving force corresponding to the entire actual output torque of the vehicle is less than or equal to the slip force of the vehicle on the ramp, the control module judges whether the time that the vehicle is in the torque keeping mode reaches preset time or not; and if the time that the vehicle is in the torque keeping mode reaches the preset time, the control module closes the ramp auxiliary system.

13. A vehicle, comprising the ramp auxiliary system of the vehicle according to any one of claims 7 to 12.

14. A computer storage medium used for storing a computer instruction, wherein when the computer instruction is executed by a controller of equipment, the control method of the ramp auxiliary system of the vehicle according to any one of claims 1 to 6 is executed.
